# EUROPÄISCHE PATENTSCHRIFT

(11) **EP 3 471 942 B1**
(45) Veröffentlichungstag und Bekanntmachung des Hinweises auf die Patenterteilung: **26.07.2023**
(21) Anmeldenummer: 17751595.4
(22) Anmeldetag: 19.06.2017
(51) Int. Cl.: B29C 63/00, B29C 63/02, B29L 31/30, B29C 63/04, B29C 51/08, B29C 51/16, B29C 59/02

(54) **VORRICHTUNG UND VERFAHREN ZUM KASCHIEREN EINES FOLIENTEILS AUF EINEM TRÄGERTEIL**
DEVICE AND METHOD FOR LAMINATING A FILM PART ONTO A SUPPORT PART
DISPOSITIF ET PROCÉDÉ POUR LE COLLAGE D'UNE PARTIE DE FEUILLE SUR UNE PIÈCE SUPPORT

(30) Priorität: 19.06.2016 DE 102016007337
(43) Veröffentlichungstag der Anmeldung: 24.04.2019
(73) Patentinhaber: Persico S.p.A., 24027 Nembro (BG) (IT)
(72) Erfinder: GASSER, Andreas, 83317 Teisendorf (DE)
(74) Vertreter: Tirloni, Bartolomeo
(86) Internationale Anmeldenummer: PCT/DE2017/000172
(87) Internationale Veröffentlichungsnummer: WO 2017/220063

(56) Entgegenhaltungen:
- EP-A2- 0 747 201
- DE-A1-102015 011 156
- DE-U1- 9 408 396

## Beschreibung

Die Erfindung betrifft eine Vorrichtung zum Kaschieren eines Folienteils, insbesondere einer Dekorlage, auf einem Trägerteil, mit einem Kaschierbereich, in welchem das Folienteil auf das Trägerteil, insbesondere auf ein Kraftfahrzeug-Innenverkleidungsteil, aufkaschierbar ist, mit einem diesem Kaschierbereich nebengeordneten Randbereich, in welchem das Folienteil über das Trägerteil übersteht, um einen Umbugbereich an dem Folienteil zu erzeugen, der später um eine Trägerteilkante umbugbar ist, und mit einem Werkzeug, bei welcher das Werkzeug eine erste Werkzeughälfte zum Erzeugen einer Oberflächengestaltung an dem Folienteil und eine zweite Werkzeughälfte zum Aufnehmen des Trägerteils aufweist.

Die Erfindung betrifft darüber hinaus eine Anlage zum Herstellen eines mit einem Folienteils, insbesondere mit einer Dekorlage, kaschierten Bauteils, insbesondere eines Kraftfahrzeug-Innenverkleidungsteils, mit einer Vorrichtung zum Kaschieren des Folienteils auf einem Trägerteil und mit einer Vorrichtung zum Umbugen eines radial über eine Trägerteilkante überstehenden Umbugbereichs des Folienteils.

Die Erfindung betrifft ferner ein Verfahren zum Kaschieren eines Folienteils, insbesondere einer Dekorlage, auf einem Trägerteil mittels eines einem erste und zweite Werkzeughälfte umfassenden Werkzeugs, bei welchem das Folienteil in dem Werkzeug mit einer Oberflächengestaltung versehen werden kann, bei welchem das Folienteil in einem Kaschierbereich auf das Trägerteil aufkaschiert wird, und bei welchem in einem diesem Kaschierbereich nebengeordneten Randbereich ein Umbugbereich erzeugt wird, der später um eine Trägerteilkante umgebugt werden kann.

Gattungsgemäße Vorrichtungen zum Kaschieren von Halbzeugen mit einer Folie oder dergleichen sowie diesbezügliche Verfahren sind aus dem Stand der Technik bereits bekannt.

In der Regel geht es hierbei darum, einem Funktionsbauteil, wie beispielsweise einem für einem Verbraucher bzw. Kunden optisch und haptisch wahrnehmbaren Bauteil, etwa einem Kraftfahrzeug-Innenverkleidungsteil oder dergleichen, eine entsprechend hochwertige Oberfläche zu verleihen. Diese Funktionsbauteile bestehen meistens aus einem weniger hochwertig anmutenden Trägerteil, beispielsweise aus Kunststoff, und einer höherwertig anmutenden Beschichtung bzw. Kaschierung, welche mit dem Trägerteil dauerhaft verbunden wird. Hierdurch können solche Funktionsbauteile relativ kostengünstig hergestellt werden. Eine entsprechende Beschichtung bzw. Kaschierung kann gut mittels einer Folie bzw. eines Folienteils bereitgestellt werden.

Ferner ist es oftmals gewünscht, dass die Funktionsbauteile mit einer speziellen Oberflächengestaltung, wie einer Narbung bzw. Ledernarbung oder ähnlichem, ausgestattet sein sollen, um mithilfe einer solchen speziell gestalteten Dekorlage gezielt einen Eindruck einer Lederoberfläche zu vermitteln. Hierbei kommen sogenannte In-Mould-Graining-(IMG)-Verfahren zum Einsatz, bei welchen IMG-Werkzeuge zum Einsatz kommen. Ein solches IMG-Werkzeug besitzt eine mit einem Negativbild einer Narbung oder dergleichen versehende Werkzeughälfte, welche auch als IMG-Werkzeughälfte bzw. IMG-Schale bezeichnet ist, mittels welcher eine entsprechende Oberflächengestaltung auf eine sichtbaren A-Seite oder Gutseite eines aufzukaschierenden Folienteils eingebracht wird. Hierzu wird das entsprechende Folienteil mittels Unterdrucks an die Werkzeughälfte gesogen. Dies kann in einem entsprechend eingerichteten Werkzeug beispielsweise kurz vor dem Anbringen des Folienteils an das Trägerteil oder auch gleichzeitig während des Anbringens des Folienteils an das Trägerteil erfolgen, wobei das Trägerteil in einer zweiten Werkzeughälfte des Werkzeugs platziert ist. Bei einem derartigen Kaschiervorgang steht das Folienteil mit einem Überhang seitlich noch über das Trägerteil über, um nach dem Umschlagen bzw. Umbugen des Folienteils um die Kante des Trägerteils später noch mit der Rückseite des Trägerteils "verklebt" werden zu können. Dieser im Auslauf des Werkzeugs befindliche Überhang wird auch als Umbugbereich bzw. Umbuglappen des Folienteils bezeichnet.

Es versteht sich, dass eine entsprechende Beschichtung bzw. Kaschierung mit größter Sorgfalt auf das Trägerteil aufgebracht werden muss, um den gewünschten hochwertigen Gesamteindruck erzielen zu können. Insbesondere dürfen an der Beschichtung bzw. Kaschierung keine Verwerfungen, wie etwa Falten usw., auftreten, was auf der Fläche eines Trägerteils meist auch immer gut gelingt. Kritischer sind jedoch die Kanten eines Trägerteils, an welchen das Folienteil nach dem Aufkaschieren genauso verwerfungsfrei bzw. faltenfrei an dem Trägerteil anliegen muss, da diese Kanten meistens auch sichtbar sind. Um die Gefahr einer unzureichenden Kaschierung der Trägerteilkante zu verringern, ist oftmals unmittelbar neben der Trägerteilkante eine Hohlkehle oder dergleichen in der zweiten Werkzeughälfte eingearbeitet, in welche der Umbugbereich des Folienteils eingebracht bzw. eingezogen werden kann, um so auch an den hinteren Teil der Trägerteil kante ankaschiert werden zu können. Jedoch kommt es hierbei immer wieder zu unbefriedigenden Ergebnissen, so dass fertig hergestellte Funktionsbauteile oftmals als Ausschuss aussortiert werden müssen.

Die DE 10 2015 011 156 A1 lehrt beispielsweise ein gattungsgemäßes "In-Mould-Graining"-Kaschieren, kurz IMG-Kaschieren, einer bevorzugt erwärmten Folie auf einem Trägerteil, um hierdurch ein hochwertiges Funktionsbauteil zu erhalten. EP0747201A2 und DE9408396U1 offenbaren eine Vorrichtung und ein Verfahren zum Kaschieren eines Folienteils auf einem Trägerteil.

Es ist Aufgabe vorliegender Erfindung, gattungsgemäße Vorrichtungen und Verfahren zum Kaschieren eines Trägerteils mit einem Folienteil weiterzuentwickeln, um insbesondere ein höherwertigeres Kaschierergebnis betriebssicher gewährleisten zu können. Darüber hinaus soll auch Folienmaterial eingespart werden, wodurch, insbesondere hinsichtlich eines Massenprodukts, die Herstellungskosten insgesamt signifikant reduziert werden können.

Die Aufgabe der Erfindung wird nach einem Aspekt der Erfindung durch eine Vorrichtung nach Anspruch 1 gelöst
Umfasst die erste Werkzeughälfte thermisch unterschiedlich wirkende Teilbereiche, nämlich einen ersten Teilbereich mit einer Kontur für die Oberflächengestaltung, welcher mit dem Kaschierbereich wechselwirkt, und einen Thermoteilbereich, welcher mit dem dem Kaschierbereich nebengeordneten Randbereich wechselwirkt, kann der Randbereich, in welchem sich hauptsächlich das Folienteil mit seinem Umbugbereich befindet, insbesondere wärmer temperiert werden als der Rest des Folienteils im Kaschierbereich.

Der erste Teilbereich und der Thermoteilbereich werden durch eine entsprechende Materialwahl an der Vorrichtung, insbesondere an der ersten Werkzeughälfte, realisiert.

Bei einer konkreten Ausgestaltung der Erfindung kann die erste Werkzeughälfte in dem Kaschierbereich beispielsweise eine "IMG-Schale" aus einem Nickelmaterial umfassen, während der Randbereich aus einem Kunststoff oder ähnlich thermisch besser isoliert bereitgestellt ist.

Durch den sich hierdurch ergebenen thermischen Vorteil ist der Umbugbereich zumindest temporär elastischer ausgestaltet als der Rest des Folienteils, wodurch sich das Folienteil mit seinem Umbugbereich beim Aufkaschieren auf das Trägerteil besser verformen und somit vollständiger an die Trägerteilkante des Trägerteils anschmiegen lässt.

Insbesondere werden in dem Randbereich dann weniger Umformkräfte benötigt, um den Umbugbereich beispielsweise in eine Hohlkehle oder dergleichen der zweiten Werkzeughälfte zu verbringen bzw. einzusaugen, so dass sich das Folienteil mit seinem Umbugbereich insgesamt geschmeidiger bis an den hinteren Bereich der Trägerteilkante anlegt und somit hochwertiger an der gesamten Trägerteilkante ankaschieren lässt.

Hierdurch kann der Kantenbereich eines Funktionsbauteils mit einer qualitativ hochwertigeren Kaschierung versehen werden.

Bei einer Vorrichtung zum Kaschieren eines Trägerteils mit einem Folienteil kühlt sich ein vor dem Einbringen in das Werkzeug vorgewärmtes Folienteil bei einem Kontakt mit eben diesem Werkzeug auch immer etwas ab, insbesondere bei einem Kontakt mit einer Werkzeughälfte des Werkzeugs während des Prägens einer Oberflächengestaltung in das Folienteil, wie bei einem IMG-Kaschieren. Hierbei kommt es in kritischen Bereichen an der Trägerteilkante bisher immer wieder zu Fehlkaschierungen. Insbesondere findet oftmals nur eine ausreichende Vorderkantenkaschierung statt, das heißt, dass die Trägerteilkante nur in ihrem vorderen Bereich, welcher der Gutseite des herzustellenden Funktionsbauteils zugewandt ist, ausreichend gut kaschiert ist. Dies kann wiederum zu erheblichen Problemen an einer nachgeschalteten Umbugvorrichtung führen, in welcher der Umbugbereich vollständig um die Trägerkante umgebugt wird.

Es wurde vorliegend erkannt, dass das Verhindern eines kritischen Abkühlens des Folienteils speziell in dem Umbugbereich bereits ausreicht, um einerseits auch eine hervorragende Hinterkantenkaschierung der Trägerteilkante zu erzielen.

Andererseits wird vorliegend erzielt, dass der Umbugbereich betriebssicher in die an der zweiten Werkzeughälfte vorgesehenen Hohlkehle eingebracht bzw. eingesogen werden kann, wodurch die Gefahr ausgeschlossen bzw. zumindest signifikant verringert werden kann, dass der Umbugbereich eben nicht vollständig in die Hohlkehle hineingezogen wird, was wiederum zu einem verkürzten Umbugbereich führt, der mit der Rückseite des Trägerteils dauerhaft verbunden werden kann.

Insbesondere aufgrund von Wärmetoleranzen können hinsichtlich des zur Verfügung stehenden Umbugbereichs unterschiedliche Längen zu Verfügung stehen, wodurch unter Umständen die Hohlkehle in der zweiten Werkzeughälfte nachgefrässt werden muss. Dies ist nicht nur aufwändig, sondern verteuert auch die Herstellung erheblich.

Darüber hinaus kann durch Vermeidung insbesondere der vorstehend genannten Probleme eine nicht unerhebliche Folieneinsparung erzielt werden. So kann etwa eine Folienersparnis in der Länge und Breite von 30 mm bis 40 mm oder ein signifikant verbessertes Kaschierergebnis, insbesondere bei gleichem Folienmaterialverbrauch, erzielt werden.

Eine mögliche Reduzierung an Folienmaterial sei an dieser Stelle exemplarisch hinsichtlich des Beispiels "Folienerspamis C381" erläutert, wobei ein Folienverbrauch pro Carset bisher 0,918 m² betrug, aber unter Berücksichtigung vorliegender Erfindung nunmehr lediglich 0,81 m² pro Carset beträgt. Daraus ergibt sich eine Ersparnis von 0,108 m² pro Carset, wodurch eine Ersparnis von 0,84 € pro Carset erzielt werden kann, legt man Kosten für eine TPO1-Schaumfolie von 7,80 € pro m² zugrunde. Dies macht bei 200.000 Fahrzeugen insgesamt eine Kostenersparnis von 168.480,00 € pro Jahr aus.

Die vorliegenden Effekte und Vorteile werden dadurch erzielt, dass dem Thermoteilbereich insbesondere der ersten Werkzeughälfte andere thermische Eigenschaften innewohnen als dem ersten Teilbereich dieser Werkzeughälfte.

Die Begrifflichkeit "Thermoteilbereich" beschreibt hierbei einen Teilbereich der Vorrichtung, insbesondere des Werkzeugs, und bevorzugt der ersten Werkzeughälfte, mit welchem eine Wärmeableitung aus dem Umbugbereich des Folienteils signifikant reduziert oder nahezu zur Gänze unterbunden wird.

Bei entsprechender Ausgestaltung der Vorrichtung kann kumulativ sogar ein zusätzlicher Wärmeeintrag in den Umbugbereich des Folienteils hinein bewirkt werden, wie nachstehend noch erläutert wird.

Der Begriff "Folienteil" beschreibt im Sinne der Erfindung jegliche Materialbahn, welche auf einem Trägerteil aufkaschierbar ist, wodurch ein zuvor im Wesentlichen zweidimensionales Folienteil eine dreidimensionale Gestalt annimmt.

In der Regel handelt es sich bei dem Folienteil um eine Dekorlage, mittels welchem das kaschierte Trägerteil eine optisch ansprechende Oberflächenseite erhält.

Hierzu wird das Folienteil bevorzugt mit einem Muster, einer Oberflächengestaltung, einer Narbung bzw. Ledernarbung oder ähnlichem versehen, wodurch es eine Gutseite bzw. eine A-Seite erhält, welche eine dem Trägerteil abgewandte, optisch und haptisch angenehme Seite bildet. Die "Schlechtseite" bzw. "B-Seite" ist dem Trägerteil zugewandt, was nichts anderes bedeutet, als dass diese Seite mit dem Trägerteil wirkverbunden bzw. verklebt ist.

Hierdurch können optisch und haptisch hochwertige Bauteile, wie beispielsweise ein Kraftfahrzeug-Innenverkleidungsteil oder dergleichen, kostengünstig hergestellt werden.

Die Begrifflichkeit "Umbugbereich" beschreibt einen Teilbereich des Folienteils, welcher von dem Kaschierbereich ausgehend bis in einen Folienauslauf des Werkzeugs ragt, und welcher somit in dem dem Kaschierbereich nebengeordneten Randbereich angeordnet ist.

Mit anderen Worten heißt das, dass der Umbugbereich insbesondere während des Kaschiervorgangs über das eigentliche Trägerteil übersteht, um nach dem Kaschiervorgang etwa in einer der Kaschiervorrichtung nachgeschalteten Umbugvorrichtung letztendlich vollständig um die Trägerteilkante umgebugt bzw. umgeschlagen werden zu können.

In der Regel wird der sich in dem Folienauslauf befindliche Umbugbereich nach dem Kaschieren des Folienteils noch gekürzt, beispielsweise mittels eines Stanzwerkzeugs, welches hierfür zumindest teilweise in eine an der zweiten Werkzeughälfte vorgesehenen Stanznut eintauchen kann. Der übriggebliebene, restliche Umbugbereich wird dann später auf der Rückseite des Trägerteils verklebt.

Das "Umbugen" soll vor allem eine Umklappbewegung um 90 ° oder um 180 ° sein, wobei auch andere Werte im Einzelfall relevant sein können, vor allem aber Werte größer als 90 °.

Das vorliegende Werkzeug ist bevorzugt dazu eingerichtet, insbesondere ein Kraftfahrzeug-Innenverkleidungsteil herzustellen.

Das Werkzeug umfasst eine erste Werkzeughälfte und eine zweite Werkzeughälfte, welche derart komplementär zueinander ausgestaltet sind, dass mit dem Werkzeug ein Folienteil auf einem Trägerteil aufkaschiert werden kann.

In der Regel handelt es sich bei der ersten Werkzeughälfte, um ein Oberwerkzeug, welche auch als Schalenwerkzeughälfte bezeichnet wird. Oftmals umfasst die erste Werkzeughälfte eine "IMG-Schale", mittels welcher eine Oberflächengestaltung in die Gutseite eines Folienteils eingeprägt werden kann.

Bei der zweiten Werkzeughälfte handelt es sich entsprechend um ein Unterwerkzeug, welche oftmals als Positivwerkzeughälfte bezeichnet ist. Diese zweite Werkzeughälfte hält mit einer Trägeraufnahme das Trägerteil in Position. Meistens ist diese zweite Werkzeughälfte mit einer Materialaussparung direkt neben der Trägeraufnahme ausgerüstet, in welche der Umbugbereich tiefer in die zweite Werkzeughälfte verbracht bzw. gezogen werden kann, um den Umbugbereich mit dem Hinterkantenbereich der Trägerteilkante noch besser in Überdeckung bringen zu können.

Diese Materialaussparung ist beispielsweise als Hohlkehle oder dergleichen an der zweiten Werkzeughälfte ausgestaltet.

Insbesondere handelt es sich vorliegend um ein In-Mould-Graining-(IMG)-Werkzeug, mittels welchem ein entsprechendes IMG-Kaschieren bewerkstelligt werden kann, wie bei der der Erfindung zugrundeliegenden Lösung bevorzugt.

Der Begriff "Kaschierbereich" beschreibt im Sinne der Erfindung denjenigen Bereich der Vorrichtung, in welchem das Folienteil unter Zuhilfenahme des Werkzeugs an das Trägerteil angepresst und somit letztendlich angebracht bzw. auf das Trägerteil aufkaschiert wird. Der Kaschierbereich definiert sich hierbei meistens durch das jeweilige Trägerteil bzw. durch eine diesbezügliche Trägerteilaufnahme an der zweiten Werkzeughälfte. Dementsprechend kann der Kaschierbereich der Vorrichtung in Abhängigkeit von dem aktuell zu kaschierenden Trägerteil variieren.

Im Gegensatz hierzu beschreibt der Begriff "Randbereich" denjenigen Bereich der Vorrichtung, welcher an dem Kaschierbereich angrenzt, und in welchem das Folienteil teilweise angeordnet ist, ohne direkt an das Trägerteil angebracht zu werden. Vielmehr formuliert dieser Randbereich einen Folienauslaufbereich des Werkzeugs zum Ausbilden eines Umbugbereich des Folienteils, welcher später mittels einer Umbugvorrichtung zur Gänze um die Trägerteilkante umgebugt und mit der Rückseite des Trägerteils "verklebt" wird.

Der Randbereich liegt hierbei in einem Auslaufbereich des Werkzeugs bzw. ist an der vorliegenden Vorrichtung durch einen entsprechenden Auslaufbereich formuliert, in welchem sich das Folienteil hauptsächlich mit seinem Umbugbereich erstreckt.

Begrifflich sei an dieser Stelle noch erwähnt, dass im Rahmen der hier vorliegenden Erfindung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

Allgemein kann gesagt werden, dass gemäß der vorliegenden Erfindung thermisch unterschiedlich wirkende Teilbereiche vorgesehen sind, um das Folienteil in dem dem Kaschierbereich nebengeordneten Randbereich anders temperieren zu können als in dem Kaschierbereich.

Eine Ausführungsvariante sieht eine Heizungeinrichtung vor, mittels welcher das Folienteil bereichsweise unterschiedlich temperierbar ist. In diesem Fall handelt es sich um aktiv wirkende Mittel zum Erzeugen.

Somit kann auch ein aktiv steuer- bzw. regelbarer Thermoteilbereich geschaffen werden, welcher nicht nur die bereits vorhandene Prozesswärmeenergie nutzt, sondern darüber hinaus noch weitere Wärmeenergie zusätzlich in die Vorrichtung, insbesondere in den Randbereich, bzw. in ein Verfahren zum Kaschieren eines Folienteils auf einem Trägerteil einbringen kann.

Insofern ist es besonders vorteilhaft, wenn mittels der Heizungeinrichtung zumindest die erste Werkzeughälfte bereichsweise unterschiedlich temperierbar ist.

Durch das zusätzliche Werkzeugteil lässt sich vorteilhafterweise speziell der Umbugbereich des Folienteils thermisch anders behandeln als der Restbereich des Folienteils, wodurch die oben erläuterten Effekte und Vorteile erreicht werden können.

Es ist möglich, dass das zusätzliche Werkzeugteil eine integrale Bauteilkomponente der ersten Werkzeugteilhälfte ist oder als eigenständiges Werkzeugteil neben der ersten Werkzeughälfte angeordnet ist.

Um mit dem Umbugbereich des Folienteils gut wechselwirken und hierbei die gewünschten Effekte erzielen zu können, ist es zweckmäßig, wenn das zusätzliche Werkzeugteil gegenüberliegend dem dem Kaschierbereich nebengeordneten Randbereich anordenbar ist.

Das zusätzliche Werkzeugteil kann baulich besonders einfach und kostengünstig bereitgestellt werden, wenn das zusätzliche Werkzeugteil ein Material umfasst, welches von dem Material der ersten Werkzeughälfte und/oder der zweiten Werkzeughälfte verschieden ist.

Das Material, welches das zusätzliche Werkzeugteil umfasst, weist thermisch schlechter leitende Eigenschaften auf. Auch hier sei daran gedacht, dass das zusätzliche Werkzeugteil vollständig oder teilweise aus thermisch schlechtem leitendem Material bestehen kann, oder auch nur teilweise hierdurch beschichtet sein kann.

Kumulativ oder alternativ ist es vorteilhaft, wenn das zusätzliche Werkzeugteil gegenüber der ersten und/oder der zweiten Werkzeughälfte unabhängig verlagerbar ist. Durch eine derartige unabhängige Verlagerung kann das zusätzliche Werkzeugteil beispielsweise zeitversetzt intensiv oder auch weniger intensiv mit dem Umbugbereich des Folienteils in Wirkkontakt treten, wodurch ein Zeitraum variiert werden kann, in welchem es überhaupt zu einer kritischen Wärmeableitung kommen kann.

Das zusätzliche Werkzeugteil ist als Thermoteilbereich ausgeführt bzw. wird so verwendet, um das Folienteil in dem dem Kaschierbereich nebengeordneten Randbereich anders temperieren zu können als in dem Kaschierbereich.

Insofern ist das zusätzliche Werkzeugteil zu den bereits vorhandenen beiden Werkzeughälften vorgesehen, um einen Folienauslaufbereich eines Kaschierwerkzeugs und somit auch das Folienteil in dem dem Kaschierbereich nebengeordneten Randbereich anders temperieren zu können als in dem Kaschierbereich.

Des Weiteren ist es vorteilhaft, wenn das Werkzeug einen Thermoteilbereich umfasst, welcher zu mehr als 30% oder zu mehr als 50%, vorzugsweise zu mehr als 90%, aus einem Thermomaterial besteht als bevorzugt andere Abschnitte der ersten Werkzeughälfte. Hierdurch können entsprechende Gebiete an dem Werkzeug zur thermischen Behandlung des Folienteils baulich einfach und damit auch besonders kostengünstig mit den gewünschten thermischen Eigenschaften ausgebildet werden.

In diesem Zusammenhang ist es bereits ausreichend, wenn speziell die erste Werkzeughälfte einen Thermoteilbereich umfasst, welcher zu mehr als 30% oder zu mehr als 50%, vorzugsweise zu mehr als 90%, aus einem Thermomaterial besteht als bevorzugt die erste Werkzeughälfte.

Der Ausdruck "Thermomaterial" beschreibt im Sinne der Erfindung ein Material, welchem zumindest gegenüber dem Werkzeugmaterial im Kaschierbereich schlechtere thermische Leiteigenschaften bzw. im Umkehrschluss bessere thermische Isoliereigenschaften innewohnen.

Hiervon unterscheidet sich etwa eine Beschichtung des Werkzeugs an den erforderlichen Stellen bzw. Bereichen, so dass es nach einer anderen Ausführungsvariante vorteilhaft sein kann, wenn das Werkzeug, insbesondere die erste Werkzeughälfte, einen Thermoteilbereich umfasst, welcher weniger als 30% oder weniger als 10%, vorzugsweise weniger als 5%, aus einem Thermomaterial besteht als bevorzugt andere Abschnitte der ersten Werkzeughälfte.

Insofern ist es gegenüber dem Stand der Technik besonders vorteilhaft, wenn das Werkzeug, insbesondere die erste Werkzeughälfte, einen entsprechend geeignet ausgebildeten thermischen Isolator umfasst.

Mittels dieses thermischen Isolators gelingt es nicht nur konstruktiv, sondern auch verfahrenstechnisch einfach, das Folienteil thermisch unterschiedlich zu behandeln.

Speziell der dem Kaschierbereich nebengeordnete Randbereich kann hier thermisch effektiver isoliert werden, so dass die gewünschten thermischen Effekte an dem Umbugbereich des Folienteils mit einfachen Mitteln erreicht werden können.

Die vorliegend gewünschte thermische Wirkung auf den Umbugbereich kann sehr zielgerichtet umgesetzt werden, wenn ein Thermoteilbereich und/oder ein zusätzliches Werkzeugteil gegenüberliegend einer durch die zweite Werkzeughälfte ausgestalteten Stanznut und/oder an einer dem Kaschierbereich abgewandten Seite der Stanznut angeordnet sind.

Es hat sich gezeigt, dass es ausreicht, wenn die bezüglich des Umbugbereichs thermisch wirkenden Einrichtungen, wie insbesondere der Thermoteilbereich und/oder das zusätzliche Werkzeugteil, oberhalb einer Stanznut der zweiten Werkzeughälfte angeordnet sind, um das Folienteil in dem dem Kaschierbereich nebengeordneten Randbereich im Sinne der Erfindung anders temperieren zu können als in dem Kaschierbereich.

Es genügt oftmals bereits, wenn derartige thermisch wirkende Einrichtungen erst ab Beschnitt bzw. ab der Stanznut, also in Richtung einer dem Kaschierbereich abgewandten Seite der Stanznut gesehen, eingerichtet sind.

Insofern sind die bezüglich des Umbugbereichs thermisch wirkenden Einrichtungen, wie insbesondere der Thermoteilbereich, und/oder das zusätzliche Werkzeugteil in dem Folienauslaufbereich des Werkzeugs, insbesondere in der ersten Werkzeughälfte, platziert.

Im Allgemeinen kann die Materialaussparung bzw. der Hinterzug hierbei speziell durch mindestens drei Varianten bereitgestellt werden. Erstens kann die Materialaussparung derart gegenüber dem Kaschierbereich angeordnet sein, dass die Hinterkante des Trägerteils frei mit einem nur geringen Hinterzug angeordnet ist. Zweitens kann eine Standardkontur mit notwendigem Hinterzug zur hinteren Kantenkaschierung verwendet werden. Und drittens kein Hinterzug zur definierten Vorderkantenkaschierung.

In allen drei Bereichen wurde das Folienteil bzw. dessen Umbugbereich voll an die entsprechende Kontur der Materialaussparung hineingezogen. Ebenfalls in die Standardkontur, hinsichtlich welche eine Hinterkantenkaschierung an dem Trägerteil erfolgte, was zu den gewünschten Vorteilen bezüglich der Umbugvorrichtung führt.

Jedenfalls kann mittels der hier vorgeschlagenen Lösungen das elastoplastische Verformverhalten des Folienteils im Umbugbereich signifikant verbessert werden.

Vorliegend kann ein Ansaugen des Umbugbereichs an die zweite Werkzeughälfte wesentlich inniger erfolgen, da der Umbugbereich leichter verformbar ist, je höher seine Eigentemperatur ist. Vorzugsweise an der ersten Werkzeughälfte außerhalb des Kaschierbereichs ist eine Materialausnehmung zum Umlenken des Umbugbereichs des Folienteils angeordnet, mittels welcher ein Materialreservoire zum Vorhalten einer zusätzlichen Länge an dem Umbugbereich erzeugbar ist.

Mit einer solchen Materialausnehmung kann eine deutliche Spannungsreduzierung an dem Umbugbereich beim Ansaugen des Folienteils an die zweite Werkzeughälfte erzielt werden, so dass der Umbugbereich effektiver an die Trägerteilkante ankaschiert werden kann, wie bereits erläutert.

Vorteilhafterweise weist die erste Werkzeughälfte eine Einrichtung zum temporären Zwischenlagern eines zusätzlichen Materialabschnitts des Umbugbereichs des Folienteils auf. Allein hierdurch sind gattungsgemäßen herkömmlichen Werkzeugs bereits entscheidend weiterentwickelt.

Diese Materialausnehmung kann insbesondere als ein Hinterzug in Gestalt einer Hohlkehle an der ersten Werkzeughälfte ausgebildet sein.

Die vorteilhafte Materialausnehmung kann kumulativ vorhanden sein, wodurch der Umbugbereich besonders leichtgängig in die an der zweiten Werkzeughälfte vorgesehenen Materialaussparung eingezogen werden kann.

Durch diese Materialausnehmung kann der Einsatz von thermischen Isolatoren aber auch stark reduziert werden.

Die Aufgabe der Erfindung wird des Weiteren von einer Anlage zum Herstellen eines mit einem Folienteil, insbesondere mit einer Dekorlage, kaschierten Bauteils, insbesondere eines Kraftfahrzeug-Innenverkleidungsteils, mit einer Vorrichtung zum Kaschieren des Folienteils auf einem Trägerteil und mit einer Vorrichtung zum Umbugen eines radial über eine Trägerteilkante überstehenden Umbugbereichs des Folienteils gelöst, wobei sich die Anlage dadurch auszeichnet, dass die Anlage eine Vorrichtung mit wenigstens einem der hier erläuterten Merkmale umfasst.

Umfasst die Anlage eine Vorrichtung zum Kaschieren des Folienteils auf dem Trägerteil im Sinne der Erfindung, kann das kaschierte Bauteil mittels der nachgeordneten Umbugvorrichtung einfacher fertig gestellt werden. Genauer gesagt, je präziser der Umbugbereich des Folienteils an der Trägerteilkante, insbesondere an der Hinterkante der Trägerteilkante, mittels der Kaschiervorrichtung angebracht wurde, desto genauer gelingt auch ein finales Umbugen des Umbugbereichs insbesondere um den hinteren Kantenbereich der Trägerteilkante.

Die Aufgabe der Erfindung wird ebenfalls durch ein Verfahren zum Kaschieren eines Folienteils nach Anspruch 11 gelöst.

Durch diese vorgeschlagene Verfahrenslösung können der sich hauptsächlich im Randbereich befindliche Umbugbereich des Folienteils und der sich hauptsächlich im Kaschierbereich befindliche Rest des Folienteils thermisch unterschiedlich behandelt werden, so dass speziell während des Kaschierens in dem Randbereich eine für den Umbugbereich vorteilhafte Temperatur einstellbar ist, welche von der Temperatur im Kaschierbereich verschieden ist, insbesondere höher ist.

Insofern ist es vorliegend möglich, den Umbugbereich des Folienteils ganz gezielt thermisch anders zu behandeln als den Rest des Folienteils.

Somit kann vorliegend die Gefahr verringert oder idealerweise sogar zur Gänze verhindert werden, dass der Umbugbereich kritisch auskühlt.

Ein zusätzliches Werkzeugteil wird verwendet, um den Umbugbereich des Folienteils thermisch vorteilhaft manipulieren zu können.

Vorteilhafterweise kann hierdurch verfahrenstechnisch sehr simpel ein thermischer Isolator in dem Randbereich platziert werden.

Hierbei ist es zusätzlich denkbar, dass die erste Werkzeughälfte und das zusätzliche Werkzeugteil zeitversetzt mit dem Folienteil bzw. mit dem Umbugbereich des Folienteils in Wirkverbindung gebracht werden, um zu verhindern, dass der Umbugbereich kritisch aus- bzw. abkühlt, so dass sich vorliegend das elastoplastische Verformverhalten des Folienteils im Umbugbereich wesentlich verbessern lässt.

Dies liegt unter anderem daran, dass ein Ansaugen des Umbugbereichs an die zweite Werkzeughälfte wesentlich inniger erfolgen kann, da der Umbugbereich leichter verformbar ist, je höher seine Eigentemperatur ist.

Vorzugsweise wird der Umbugbereich des Folienteils zumindest teilweise in eine zusätzliche Materialausnehmung hineinverlagert, um eine längere Abwicklung des Umbugbereichs in dem dem Kaschierbereich nebengeordneten Randbereich zu erzeugen, so dass der Umbugbereich während des Kaschiervorgangs des Folienteils an dem Trägerteil mit einer geringeren Spannung in eine Materialaussparung der zweiten Werkzeughälfte eingebracht werden kann.

Kumulativ oder alternativ kann hierdurch eine ebenfalls verbesserte Hinterkantenkaschierung erreicht werden, mittels welcher einerseits die Gefahr von Fehlstellen an der Kaschierung vermieden sowie andererseits ein betriebssicheres Umbugen des Umbugbereichs um die Trägerteilkante herum bei einem nachgeordneten Umbugverfahren erleichtert werden kann.

Die Randkante des Kaschierbereichs kann durch den Übergang zwischen Kaschierbereich und Randbereich bestimmt werden. Jedenfalls ist die Randkante durch eine an dem Werkzeug, insbesondere an der zweiten Werkzeughälfte, angeordneten Stanznut erkennbar.

Erfährt das Folienteil, insbesondere der Umbugbereich des Folienteils, in einem dem Kaschierbereich nebengeordneten Randbereich eine Streckenverlängerung, kann das Folienteil mit seinem Umbugbereich spannungsfreier an die zweite Werkzeughälfte angesaugt und letztendlich auch vollständiger an die Trägerteilkante ankaschiert werden.

Eine derartige Streckenverlängerung bzw. Verlängerung einer Abwicklung des Umbugbereichs des Folienteils kann einfach erreicht werden, wenn das Folienteil in eine neben dem Kaschierbereich angeordneten Materialausnehmung in die erste Werkzeughälfte eingesogen wird, um ein Materialreservoire an dem Umbugbereich zu erzeugen, so dass der Umbugbereich anschließend wiederum einfacher in eine Materialaussparung der zweiten Werkzeughälfte eingesogen werden kann.

Das Verfahren sieht vor, dass das Folienteil in einem dem Kaschierbereich nebengeordneten Randbereich langsamer abkühlt als in dem Kaschierbereich. Hierdurch verbleibt mehr Wärmeenergie als bisher möglich in dem Umbugbereich des Folienteils zurück.

Insgesamt kann vorliegend der Umbugbereich mit einer geringeren Eigensteifigkeit und damit geschmeidiger an die zweite Werkzeughälfte angesaugt werden, so dass insbesondere eine wesentlich bessere Hinterkantenkaschierung gewährleistet werden kann.

Das Folienteil wird vorliegend in dem Umbugbereich also bewusst bzw. gezielt wärmer gehalten als in den übrigen Bereichen des Folienteils.

Vorzugsweise sieht das Verfahren vor, dass das Folienteil in einem dem Kaschierbereich nebengeordneten Randbereich zusätzlich erwärmt wird. Hierdurch kann in dem Umbugbereich des Folienteils noch gezielter eine gewünschte Temperatur eingestellt werden.

Ferner kann die Gefahr einer unerwünschten Abkühlung des Umbugbereichs des Folienteils weiter reduziert werden, wenn ein dem Kaschierbereich nebengeordneter Randbereich der ersten Werkzeughälfte, insbesondere der Schalenwerkzeughälfte, folienanlagefrei gehalten wird.

Wird ein dem Kaschierbereich nebengeordneter Randbereich der zweiten Werkzeughälfte, insbesondere der Positivwerkzeughälfte, folienanlagefrei gehalten, kann dies den gleichen Effekt hervorbringen.

Mit vorliegender Erfindung wird insbesondere erzielt, dass ein Folienteil oder dergleichen in einem Auslaufbereich der Vorrichtung bzw. des Werkzeugs, in welchem der Umbugbereich des Folienteil liegt, speziell in Bezug auf den Restbereich des Folienteils nicht zu stark bzw. weniger stark abkühlt.

Hierdurch kann eine Verbesserung des Kaschierergebnisses erzielt werden, wie etwa die Vermeidung von Falten oder ähnlichem.

Ferner wird ein geringerer Energieverlust des Folienteils erreicht, insbesondere in dem Thermoteilbereich bzw. in dem Bereich des zusätzlichen Werkzeugteils bzw. Einsatzteil.

Vorteilhafterweise ist vorliegend eine sehr gute Kantenkaschierung der Trägerteilkante möglich, insbesondere eine betriebssichere Hinterkantenkaschierung.

Speziell ist eine Verbesserung bzw. Erleichterung für das Umbugen des Umbugbereichs um die Trägerteilkante erzielt.

Insbesondere durch das Vorsehen eines thermischen Isolators an der ersten Werkzeughälfte ist ein geringeres Gewicht erzielbar, welches das Handling des Werkzeugs allgemein erleichtert, insbesondere einer diesbezüglichen IMG-Schale bzw. der Galvano-schale.

Es versteht sich, dass die vorstehend konkreter erläuterten Modifikationen nicht abschließend sind, so dass der Folienauslauf der beiden Werkzeughälften im Sinne der Erfindung alternativ ausgestaltet sein kann, um die hier erläuterten Effekte und Vorteile erzielen zu können.

Mit vorliegender Erfindung kann insbesondere ein IMG-Kaschierverfahren vorteilhaft weiterentwickelt werden, bei welchem an einem auf einem Trägerteil zu kaschierenden Folienteil eine Oberflächengestaltung, insbesondere eine Narbung oder dergleichen, eingeprägt wird, wobei hierfür das Folienteil mittels Vakuums gegen eine erste Werkzeughälfte eines zwei Werkzeughälften umfassenden Kaschierwerkzeugs gesogen wird. Anschließend werden die zwei Werkzeughälften geschlossen, wobei das Folienteil hierbei auf einem von der zweiten Werkzeughälfte gehaltenen Trägerteil aufkaschiert wird, und wobei in einem Folienauslauf des Kaschierwerkzeugs ein Umbugbereich des Folienteils erzeugt wird. Hierbei wird das Vakuum auf Seiten der ersten Werkzeughälfte deaktiviert. Zum Aufkaschieren des Folienteils wird einerseits die Presskraft genutzt, mit welcher die zwei Werkzeughälften beim Kaschieren gegeneinandergepresst werden. Andererseits wird insbesondere der Umbugbereich des Folienteils mittels eines an der zweiten Werkzeughälfte erzeugten Vakuums gesogen, um den Umbugbereich besser an eine Trägerteilkante ankaschieren zu können.

Es versteht sich, dass die Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Die vorgeschlagenen Verfahren lassen sich problemlos insbesondere mit den hier gelehrten Vorrichtungen durchführen.

Insbesondere eignen sich diese Verfahren speziell auch für eine verbesserte Hinterkantenkaschierung, so dass es sich hierbei auch um Verfahren zum Hinterkantenkaschieren einer Trägerteilkante eines Trägerteils handeln kann, auf welchem ein Folienteil aufkaschiert wird.

Zusätzlich sind weitere Merkmale, Effekte und Vorteile vorliegender Erfindung anhand anliegender Zeichnung und nachfolgender Beschreibung erläutert, in welchen beispielhaft unterschiedlichen Werkzeugen einer Vorrichtung zum Kaschieren eines Folienteils, insbesondere einer Dekorlage, auf einem Trägerteil dargestellt und beschrieben sind.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
Figur 1 schematisch eine geschnittene Teilansicht einer Vorrichtung zum Kaschieren eines Folienteils, insbesondere einer Dekorlage, auf einem Trägerteil umfassend ein Werkzeug mit zwei Werkzeughälften zum Aufkaschieren und einem zusätzlichen Werkzeugteil zum zusätzlichen thermischen Behandeln eines Umbugbereichs des Folienteils;
Figur 2 schematisch eine Ansicht der ersten Werkzeughälfte aus der Figur 1 mit einem Folienauslauf zum Erzeugen des Umbugbereichs des Folienteils;
Figur 3 schematisch eine Schnittansicht eines weiteren Werkzeugs zum Verwenden in der Vorrichtung mit einem in die erste Werkzeughälfte eingesetzten thermischen Einsatzes; und
Figur 4 schematisch eine Schnittansicht eines alternativen Werkzeugs zum Verwenden in der Vorrichtung mit einer in die erste Werkzeughälfte als Materialausnehmung eingearbeiteten Hohlkehle.

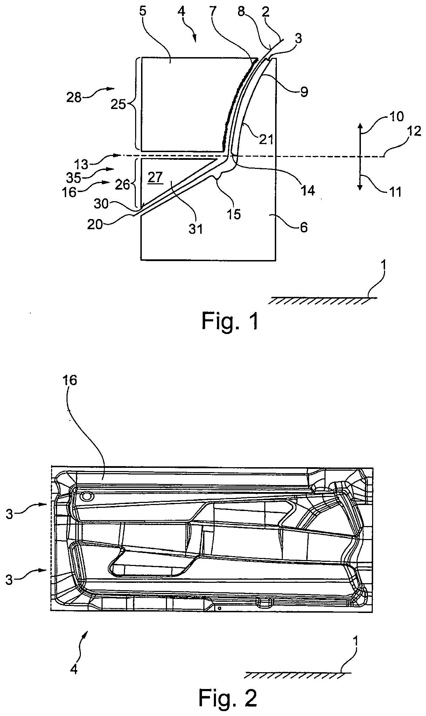

Die in der Figur 1 nur ansatzweise gezeigte Vorrichtung 1 zum Kaschieren eines Folienteils 2 auf einem Trägerteil 3 umfasst ein Werkzeug 4, welches eine erste Werkzeughälfte 5, eine sogenannte Schalenwerkzeughälfte (nicht gesondert beziffert), sowie eine zweite Werkzeughälfte 6, oftmals auch als Positivwerkzeughälfte (ebenfalls nicht gesondert beziffert) bezeichnet, umfasst.

Das Folienteil 2 kann speziell eine Dekorlage (nicht zusätzlich beziffert) bilden.

Mittels der Vorrichtung 1 kann insbesondere ein IMG-Verfahren durchgeführt werden.

Bevorzugt ist das Folienteil 2 hierfür vorgewärmt.

Die Vorrichtung 1 ist eine erste Arbeitsstation von mehreren Arbeitsstationen einer hier nicht gezeigten Anlage zum Herstellen eines mit dem Folienteil 2 kaschierten Bauteils (Trägerteil 3 plus Folienteil 2), welches insbesondere ein Kraftfahrzeug-Innenverkleidungsteil sein kann.

Die erste Werkzeughälfte 5 umfasst in diesem ersten Ausführungsbeispiel eine Kontur 7, mittels welcher eine Oberflächengestaltung (nicht gezeigt) an der Gutseite 8 des Folienteils 2 eingeprägt werden kann. Hierzu wird das Folienteil 2 durch Vakuum in bekannter Weise an die erste Werkzeughälfte 5 angesaugt.

Die zweite Werkzeughälfte 6 umfasst eine Trägerteilaufnahme 9, mittels welcher das Trägerteil 3 an der zweiten Werkzeughälfte 6 gehalten werden kann.

Zum Aufkaschieren des Folienteils 2 auf das Trägerteil 3 werden die zwei Werkzeughälften 5 und 6 aneinandergepresst, das auf der Seite der ersten Werkzeughälfte 5 erzeugte Vakuum deaktiviert sowie ein Vakuum auf der Seite der zweiten Werkzeughälfte 6 initiiert.

Die Vorrichtung 1 zeichnet sich des Weiteren durch einen Kaschierbereich 10 und einen diesem Kaschierbereich 10 nebengeordneten Randbereich 11 aus.

Der Kaschierbereich 10 ist im Wesentlichen durch die Trägerteilaufnahme 9 bzw. das zu kaschierende Trägerteil 3 an der zweiten Werkzeughälfte 6 definiert.

Der Kaschierbereich 10 zeichnet sich ferner dadurch aus, dass in diesem Kaschierbereich 10 das Folienteil 2 mit dem Trägerteil 3 in Überdeckung gebracht wird.

Der Randbereich 11 ist seitlich neben dem Kaschierbereich 10 angeordnet.

Der Randbereich 11 schließt unmittelbar an die Trägerteilaufnahme 9 bzw. das zu kaschierende Trägerteil 3 an.

In diesem Ausführungsbeispiel weisen der Kaschierbereich 10 und der Randbereich 11 eine gemeinsame Grenzlinie 12 auf, welche insofern in einem Übergangsbereich 13 zwischen dem Kaschierbereich 10 und dem Randbereich 11 liegt.

In dem Übergangsbereich 13 endet das Trägerteil 3 mit seiner Trägerteilkante 14.

Der Randbereich 11 beginnt insofern auch neben der Trägerteilkante 14.

In dem Randbereich 11 befindet sich noch eine Stanznut 15, welche an der zweiten Werkzeughälfte 6 ausgebildet ist.

Der Randbereich 11 bildet außerdem noch einen Folienauslauf 16, welcher im Wesentlichen durch das Werkzeug 4 gebildet ist.

Gemäß der Darstellung nach der Figur 2 ist der Folienauslauf 16 der Vorrichtung 1 gut ersichtlich, in welchem das Folienteil 2 bzw. dessen Umbugbereich 20 nicht zu stark abkühlen soll. Dieser Folienauslauf 16 umschließt bei dem in der Figur 1 teilweise gezeigten Werkzeug 4 gleich zwei Trägerteile 3.

In diesen Folienauslauf 16 hinein erstreckt sich das Folienteil 2 mit seinem Umbugbereich 20, der später mithilfe einer hier nicht gezeigten Umbugvorrichtung um die Trägerteilkante 14 umgebugt wird, wobei der umgebugte Umbugbereich 20 dann mit der Rückseite 21 des Trägerteils 3 wirkverbunden wird, wodurch der Kaschierprozess im Wesentlichen abgeschlossen ist.

Vor dem Umbugen wird der Umbugbereich 20 jedoch noch auf Maß gekürzt, indem ein Stanzwerkzeug (nicht gezeigt) in die Stanznut 15 eingebracht wird.

Der Umbugbereich 20 bezeichnet im Sinne der Erfindung denjenigen Abschnitt des Folienteils 2, welcher seitlich über das Trägerteil 3 übersteht und hierbei in den dem Kaschierbereich 10 nebengeordneten Randbereich 11 hineinragt.

Insofern wird der Umbugbereich 20 in Abhängigkeit von der Werkzeugauslegung an dem Folienteil 2 in dem Werkzeug 4 erzeugt.

Kommt das Folienteil 2 insbesondere mit der ersten Werkzeughälfte 5 in Wirkkontakt, beispielsweise beim Prägen der Oberflächenkontur an die Gutseite 8 des Folienteils 2, kühlt das zuvor vorgewärmte Folienteil 2 ab, wodurch sich seine Eigensteifigkeit wieder erhöht.

Dies ist für das flächige Aufkaschieren des Folienteils 2 auf das Trägerteil 3 meist kein Problem, oftmals jedoch für das vollständige Ankaschieren des Umbugbereichs 20 an die Trägerteilkante 14.

Dies liegt im Speziellen daran, dass ein eigensteiferer Umbugbereich 20 sich weniger geschmeidig an die zweite Werkzeughälfte 6 und insbesondere weniger geschmeidig an die Trägerteilkante 14 anschmiegt.

Um ein kritisches Abkühlen des Umbugbereichs 20 möglichst zu vermeiden, umfasst die erste Werkzeughälfte 5 thermisch unterschiedlich wirkende Teilbereiche 25 und 26, nämlich einen ersten Teilbereich 25 mit der Kontur 7 für die Oberflächengestaltung, welcher mit dem Kaschierbereich 10 wechselwirkt, und einen Thermoteilbereich 26, welcher mit dem dem Kaschierbereich 10 nebengeordneten Randbereich 11 wechselwirkt.

Der Thermoteilbereich 26 ist hierbei als ein thermischer Isolator bzw. ein Thermomaterial 27 aus Kunststoff ausgeführt.

Es versteht sich, dass hierfür aber auch andere Materialien, wie etwa Keramik oder weniger stark wärmeleitende NE-Metalle oder dergleichen, in Frage kommen können.

Insofern umfasst das Werkzeug 4 hinsichtlich der ersten Werkzeughälfte einen Thermoteilbereich 26 aus einem Thermomaterial 27, welcher sich hinsichtlich seiner thermoisolatorischen Eigenschaften von anderen Abschnitten 28 der ersten Werkzeughälfte unterscheidet.

In diesem ersten Ausführungsbeispiel ist der Thermoteilbereich 26 durch ein zusätzliches Werkzeugteil 30 bereitgestellt.

Das zusätzliche Werkzeugteil 30 ist hierbei als eigenständiges Werkzeugteil 31 in dem dem Kaschierbereich 10 nebengeordneten Randbereich 11 angeordnet.

Gegebenenfalls kann das zusätzliche Werkzeugteil 30 unabhängig von den beiden Werkzeughälften 5 und 6 gegenüber dem Umbugbereich 20 verfahrbar sein, so dass es insbesondere im Hinblick auf die erste Werkzeughälfte 5 zeitversetzt mit dem Folienteil 2 in Wirkkontakt gebracht werden kann, um hierdurch eine Wärmeableitung aus dem Umbugbereich 20 zu reduzieren.

Jedenfalls können durch die thermisch unterschiedlich wirkende Teilbereiche 25 und 26 der Kaschierbereich 10 und der Randbereich 11 thermisch unterschiedlich behandelt werden.

Ferner zeichnet sich die Vorrichtung 1 gemäß den in den Figuren 1 und 2 gezeigten ersten Ausführungsbeispiel auch durch Mittel 35 zum Erzeugen von mindestens zwei voneinander verschiedenen Temperaturbereichen an dem Folienteil 2 aus.

Diese Mittel 35 zum Erzeugen von mindestens zwei voneinander verschiedenen Temperaturbereichen verkörpern hierbei den Thermoteilbereich 26 mit dem Thermomaterial 27.

Das zusätzliche Werkzeugteil 30 stellt auch die Mittel 35 zum Erzeugen von mindestens zwei voneinander verschiedenen Temperaturbereichen zur Verfügung, wobei diese Mittel 35 kumulativ zu dem Thermomaterial 27 eine Heizeinrichtung (nicht gezeigt) umfassen können, um den Randbereich 11 der Vorrichtung 1 bzw. des Werkzeugs 4 bzw. den Umbugbereich 20 des Folienteils 2 thermisch anders behandeln zu können.

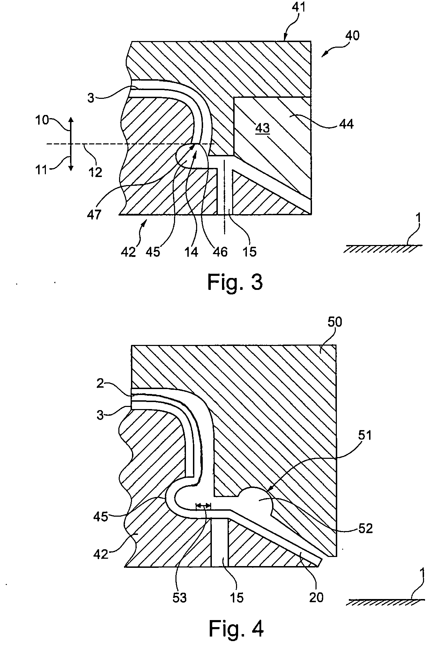

Gemäß der Darstellung nach der Figur 3 ist ein zweites Ausführungsbeispiel gezeigt.

Die Figur 3 zeigt ein alternatives Werkzeug 40 mit einer ersten Werkzeughälfte 41 und einer zweiten Werkzeughälfte 42 in Verwendung in der Vorrichtung 1, bei welchem in der ersten Werkzeughälfte 41, also der Schalenwerkzeughälfte, ein anderer Thermoteil-Bereich 43 als integrale Bauteilkomponente 44 integriert ist, um das Folienteil 2 in dem Randbereich 11 thermisch anders zu behandeln als in dem Kaschierbereich 10.

Der andere Thermoteilbereich 43 beginnt hierbei erst hinter der Stanznut 15 auf einer dem Kaschierbereich 10 abgewandten Seite der Stanznut 15.

Wird dem Umbugbereich 20 des Folienteils 2 im Sinne der Erfindung weniger Wärmeenergie entzogen, beispielsweise aufgrund des thermisch besser isolierenden Thermoteilbereichs 43, bleibt der Umbugbereich 20 formbarer und er kann leichter in eine Materialaussparung 45 der zweiten Werkzeughälfte 42 hinein verbracht bzw. gezogen werden, etwa mithilfe von Unterdruck an der zweiten Werkzeughälfte 42.

Hierdurch gelingt nicht nur eine gute Kaschierung der Vorderkante 46 der Trägerteilkante 14 des Trägerteils 3, sondern darüber hinaus ebenso eine außerordentlich gute und intensivere Kaschierung der Hinterkante 47 der Trägerteilkante 14.

Die Materialaussparung 45 ist hier als Hinterzug in Gestalt einer Hohlkehle ausgeformt.

Gemäß der Darstellung nach der Figur 4 ist ein weiteres Ausführungsbeispiel gezeigt, welches bis auf eine ausgewechselte erste Werkzeughälfte 50 in etwa dem zweiten Ausführungsbeispiel entspricht.

Die ausgewechselte erste Werkzeughälfte 50 weist eine Materialausnehmung 51 zum Umlenken des Umbugbereichs 20 des Folienteils 2 auf, mittels welcher ein Materialreservoire 52 zum Vorhalten einer zusätzlichen Länge bzw. Streckenverlängerung 53 an dem Umbugbereich 20 erzeugt wird.

Die Materialausnehmung 51 ermöglicht eine längere Abwicklung (nicht explizit beziffert) des Umbugbereichs 20 in dem dem Kaschierbereich 10 nebengeordneten Randbereich 11, so dass der Umbugbereich 20 während des Kaschiervorgangs des Folienteils 2 an dem Trägerteil 3 mit einer wesentlich geringeren Spannung in eine Materialaussparung 45 der zweiten Werkzeughälfte 42 eingebracht bzw. eingezogen werden kann.

Die Materialausnehmung 51 ist außerhalb des Kaschierbereichs 10 angeordnet.

An dieser Stelle sei explizit darauf hingewiesen, dass die Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei den vorstehend erläuterten Ausführungsbeispielen lediglich um erste Ausgestaltungen der erfindungsgemäßen Vorrichtung 1 handelt. Insofern beschränkt sich die Ausgestaltung der Erfindung nicht auf diese Ausführungsbeispiele.

### Bezugszeichenliste:

1 Vorrichtung zum Kaschieren eines Folienteils auf einem Trägerteil
2 Folienteil
3 Trägerteil
4 Werkzeug
5 erste Werkzeughälfte bzw. Schalenwerkzeughälfte bzw. IMG-Schale
6 zweite Werkzeughälfte bzw. Positivwerkzeughälfte
7 Kontur
8 Gutseite
9 Trägerteilaufnahme
10 Kaschierbereich
11 dem Kaschierbereich nebengeordneter Randbereich
12 gemeinsame Grenzlinie
13 Übergangsbereich
14 Trägerteilkante
15 Stanznut
16 Folienauslauf
20 Umbugbereich
21 Rückseite
25 erster Teilbereich bzw. erster Temperaturbereich
26 Thermoteilbereich bzw. zweiter Temperaturbereich
27 Thermomaterial bzw. thermischer Isolator
28 andere Abschnitte
30 zusätzliches, drittes Werkzeugteil bzw. Adapterteil
31 eigenständiges Werkzeugteil
35 Mittel zum Erzeugen von zwei voneinander verschiedenen Temperaturbereichen
40 alternatives Werkzeug
41 erste Werkzeughälfte bzw. Schalenwerkzeughälfte bzw. IMG-Schale
42 zweite Werkzeughälfte bzw. Positivwerkzeughälfte
43 anderer Thermoteilbereich
44 integrale Bauteilkomponente
45 Materialaussparung
46 Vorderkante
47 Hinterkante
50 ausgewechselte erste Werkzeughälfte
51 Materialausnehmung
52 Materialreservoire
53 Streckenverlängerung

## Patentansprüche

1. Vorrichtung (1) zum Kaschieren eines Folienteils (2), insbesondere einer Dekorlage, auf einem Trägerteil (3), mit einem Kaschierbereich (10), in welchem das Folienteil (2) auf das Trägerteil (3), insbesondere auf ein Kraftfahrzeug-Innenverkleidungsteil, aufkaschierbar ist, mit einem diesem Kaschierbereich (10) nebengeordneten Randbereich (11), in welchem das Folienteil (2) über das Trägerteil (3) übersteht, um einen Umbugbereich (20) an dem Folienteil (2) zu erzeugen, der später um eine Trägerteilkante (14) umbugbar ist, und mit einem Werkzeug (4; 40), bei welcher das Werkzeug (4; 40) eine erste Werkzeughälfte (5; 41; 50) zum Erzeugen einer Oberflächengestaltung an dem Folienteil (2) und eine zweite Werkzeughälfte (6; 42) zum Aufnehmen des Trägerteils (3) aufweist, ***gekennzeichnet durch*** ein zusätzliches Werkzeugteil (30), welches zumindest teilweise in der ersten Werkzeughälfte (5; 41; 50) in dem dem Kaschierbereich (10) nebengeordneten Randbereich (11) angeordnet ist, wobei das zusätzliche Werkzeugteil (30) aus einem Thermomaterial besteht, oder hiermit beschichtet ist, das bessere thermische Isoliereigenschaften im Vergleich zu einem Material der ersten Werkzeughälfte im Kaschierbereich (10) aufweist.

2. Vorrichtung (1) nach Anspruch 1, ***dadurch gekennzeichnet, dass*** das zusätzliche Werkzeugteil (30) eine integrale Bauteilkomponente (44) der ersten Werkzeugteilhälfte (5; 41; 50) ist oder als eigenständiges Werkzeugteil (31) neben der ersten Werkzeughälfte (5; 41; 50) angeordnet ist.

3. Vorrichtung (1) nach Anspruch 1 oder 2, ***dadurch gekennzeichnet, dass*** das Werkzeug (4; 40) ein In-Mould-Graining-(IMG)-Werkzeug ist, wobei die erste Werkzeughälfte (5; 41; 50) in dem Kaschierbereich (10) eine "IMG-Schale" aus einem Nickelmaterial umfasst.

4. Vorrichtung (1) nach Anspruch 1 oder 2 oder 3, ***dadurch gekennzeichnet, dass*** die zweite Werkzeughälfte (6; 42) eine Trägeraufnahme (9) umfasst, um das Trägerteil (3) in Position zu halten, wobei die zweite Werkzeughälfte (6; 42) mit einer Materialaussparung (45) direkt neben der Trägeraufnahme (9) ausgerüstet ist, in welche der Umbugbereich (20) tiefer in die zweite Werkzeughälfte (6; 42) verbracht bzw. gezogen werden kann.

5. Vorrichtung (1) nach Anspruch 4, ***dadurch gekennzeichnet, dass*** die Materialaussparung (45) als Hohlkehle oder dergleichen an der zweiten Werkzeughälfte (6; 42) ausgestaltet ist.

6. Vorrichtung (1) nach einem der vorhergehenden Ansprüche, ***dadurch gekennzeichnet, dass*** das Thermomaterial Kunststoff, Keramik oder ein weniger stark wärmeleitendes NE-Metall ist.

7. Vorrichtung (1) nach einem der vorhergehenden Ansprüche, ***dadurch gekennzeichnet, dass*** an der zweiten Werkzeughälfte (6; 42) eine Stanznut (15) vorgesehen ist, wobei das zusätzliche Werkzeugteil (30) ab der Stanznut (15) im Randbereich, in Richtung einer dem Kaschierbereich (10) abgewandten Seite der Stanznut (15) gesehen, eingerichtet ist.

8. Vorrichtung nach einem der Ansprüche 1 bis 7, ***dadurch gekennzeichnet, dass*** das zusätzliche Werkzeugteil (30) auch als Thermoteilbereich (26; 43) ausgeführt ist bzw. verwendet wird, welcher zu mehr als 30% oder zu mehr als 50%, vorzugsweise zu mehr als 90%, aus dem Thermomaterial (27) besteht als bevorzugt andere Abschnitte (28) der ersten Werkzeughälfte (5; 41; 50).

9. Vorrichtung (1)nach einem der vorhergehenden Ansprüche, ***dadurch gekennzeichnet, dass*** an der ersten Werkzeughälfte (5; 41; 50) außerhalb des Kaschierbereichs (10) eine Materialausnehmung (52) zum Umlenken des Umbugbereichs (20) des Folienteils (2) angeordnet ist, mittels welcher ein Materialreservoire (52) zum Vorhalten einer zusätzlichen Länge (53) an dem Umbugbereich (20) erzeugbar ist.

10. Anlage zum Herstellen eines mit einem Folienteil (2), insbesondere mit einer Dekorlage, kaschierten Bauteils, insbesondere eines Kraftfahrzeug-Innenverkleidungsteils, umfassend die Vorrichtung (1) zum Kaschieren des Folienteils (2) auf einem Trägerteil (3) nach einem der vorhergehenden Ansprüche und umfassend eine Vorrichtung zum Umbugen eines radial über eine Trägerteilkante (14) überstehenden Umbugbereichs (20) des Folienteils (2).

11. Verfahren zum Kaschieren eines Folienteils (2), insbesondere einer Dekorlage, auf einem Trägerteil (3) mittels eines eine erste und zweite Werkzeughälfte (5, 6; 41, 42; 50) umfassenden Werkzeugs (4; 40), bei welchem das Folienteil (2) in dem Werkzeug (4; 40) mit einer Oberflächengestaltung versehen werden kann, bei welchem das Folienteil (2) in einem Kaschierbereich (10) auf das Trägerteil (3) aufkaschiert wird, und bei welchem in einem diesem Kaschierbereich (10) nebengeordneten Randbereich (11) ein Umbugbereich (20) des Folienteils (2) erzeugt wird, der später um eine Trägerteilkante (14) umgebugt werden kann, ***dadurch gekennzeichnet, dass*** in dem Randbereich (11) in der ersten Werkzeughälfte (5; 41; 50) ein zusätzliches Werkzeugteil (30) mit dem Folienteil (2) in Wirkkontakt gebracht wird, um das Folienteil (2) in dem Randbereich (11) thermisch anders zu behandeln als in dem Kaschierbereich (10), wobei das Folienteil (2) in dem Randbereich (11) langsamer abkühlt als in dem Kaschierbereich (10).

12. Verfahren nach Anspruch 11, ***dadurch gekennzeichnet, dass*** das Folienteil (2), insbesondere der Umbugbereich (20) des Folienteils (2), in dem dem Kaschierbereich (10) nebengeordneten Randbereich (11) eine Streckenverlängerung (53) erfährt.

13. Verfahren nach einem der Ansprüche 11 bis 12, ***dadurch gekennzeichnet, dass*** das Folienteil (2) in eine neben dem Kaschierbereich (10) angeordneten Materialausnehmung (51) in die erste Werkzeughälfte (5; 41; 50) eingesogen wird, um ein Materialreservoire (52) an dem Umbugbereich (20) zu erzeugen, so dass der Umbugbereich (20) anschließend wiederum einfacher in eine Materialaussparung (45) der zweiten Werkzeughälfte (6; 42) eingesogen werden kann.

14. Verfahren nach einem der Ansprüche 11 bis 13, ***dadurch gekennzeichnet, dass*** das Folienteil (2) in dem dem Kaschierbereich (10) nebengeordneten Randbereich (11) zusätzlich erwärmt wird.

15. Verfahren nach einem der Ansprüche 11 bis 14, ***dadurch gekennzeichnet, dass*** das Folienteil (2) vor dem Einbringen in das Werkzeug (4; 40) vorgewärmt ist.

16. Verfahren nach einem der Ansprüche 11 bis 15, ***dadurch gekennzeichnet, dass*** die Oberflächengestaltung, insbesondere eine Narbung oder dergleichen, auf das Folienteil (2) eingeprägt wird, indem das Folienteil (2) mittels Vakuums gegen die erste Werkzeughälfte (5, 41, 50) gesogen wird.

17. Verfahren nach Anspruch 16, ***dadurch gekennzeichnet, dass*** die erste (5, 41, 50) und zweite Werkzeughälfte (6; 42) anschließend geschlossen werden, wobei das Folienteil (2) hierbei auf einem von der zweiten Werkzeughälfte (6; 42) gehaltenen Trägerteil (3) aufkaschiert wird, wobei der Umbugbereich (20) des Folienteils (2) in einem Folienauslauf des Kaschierwerkzeugs (4; 40) erzeugt wird, wobei das Vakuum auf der Seite der ersten Werkzeughälfte (5, 41, 50) deaktiviert wird, wobei zum Aufkaschieren des Folienteils (2) einerseits die Presskraft genutzt wird, mit welcher die erste (5, 41, 50) und zweite Werkzeughälfte (6; 42) beim Kaschieren gegeneinandergepresst werden und andererseits insbesondere der Umbugbereich (20) des Folienteils (2) mittels eines an der zweiten Werkzeughälfte (6; 42) erzeugten Vakuums gesogen wird, um den Umbugbereich (20) besser an eine Trägerteilkante (14) ankaschieren zu können.

18. Verfahren nach Anspruch 17, ***dadurch gekennzeichnet, dass*** der sich in dem Folienauslauf befindliche Umbugbereich (20) nach dem Kaschieren des Folienteils (2) noch gekürzt wird und der übriggebliebene, restliche Umbugbereich dann später auf einer Rückseite des Trägerteils (3) verklebt wird.

19. Verfahren nach einem der Ansprüche 11 bis 18, ***dadurch gekennzeichnet, dass*** das zusätzliche Werkzeugteil (30) aus einem Thermomaterial besteht, oder hiermit beschichtet ist, das bessere thermische Isoliereigenschaften im Vergleich zu einem Material der ersten Werkzeughälfte im Kaschierbereich (10) aufweist.

## Claims

1. Apparatus (1) for laminating a film part (2), in particular a decorative layer, on a carrier part (3) having a laminating region (10) in which the film part (2) can be laminated onto the carrier part (3), in particular onto a motor vehicle interior trim part, having an edge region (11) arranged adjacent to this laminating region (10) in which the film part (2) projects beyond the carrier part (3) in order to produce a bend-around region (20) on the film part (2) which can subsequently be bent around a carrier part edge (14), and having a tool (4; 40) in which the tool (4; 40) comprises a first tool half (5; 41; 50) for producing a surface design on the film part (2) and a second tool half (6; 42) for receiving the carrier part (3), ***characterized by*** an additional tool part (30) which is arranged at least partially in the first tool half (5; 41; 50) in the edge region (11) adjacent to the laminating region (10), wherein the additional tool part (30) is made of, or is coated by, a thermal material having better thermal insulating properties compared with a first tool half material in the laminating region (10).

2. Apparatus (1) according to claim 1, ***characterized in that*** the additional tool part (30) is an integral structural component (44) of the first tool part half (5; 41; 50) or is arranged as an independent tool part (31) next to the first tool half (5; 41; 50).

3. Apparatus (1) according to claim 1 or 2, ***characterized in that*** the tool (4; 40) is an in-mould graining (IMG) tool, wherein the first tool half (5; 41; 50) comprises an "IMG shell" of a nickel material in the laminating region (10).

4. Apparatus (1) according to claim 1 or 2 or 3, ***characterized in that*** the second tool half (6, 42) comprises a carrier receptacle (9) for holding the carrier part (3) in position, wherein the second tool half (6, 42) is provided with a material recess (45) directly adjacent to the carrier receptacle (9) in which the bend-around region (20) can be accommodated or drawn more deeply into the second tool half (6, 42).

5. Apparatus (1) according to claim 4, ***characterized in that*** the material recess (45) is configured as a concave fillet or the like in the second tool half (6, 42).

6. Apparatus (1) according to anyone of the preceding claims, ***characterized in that** the* thermal material is plastic, ceramic or less strongly conducting NE metal.

7. Apparatus (1) according to anyone of the preceding claims, ***characterized in that** the* second tool half (6, 42) is provided with a stamping groove (15), wherein the additional tool part (30) is set up from the stamping groove (15) in the edge region viewed in the direction of A-side of the stamping groove facing away from the laminating region.

8. Apparatus (1) according to anyone of claims from 1 to 7, ***characterized in that** the* additional tool part (30) is designed or used as a thermal sub-region (26; 43) which consists of more than 30% or more than 50%, preferably more than 90% of said thermal material (27) than preferably other sections (28) of the first tool half (5; 41; 50).

9. Apparatus (1) according to anyone of the preceding claims, ***characterized in that*** a material recess (52) for deflecting the bend-around region (20) of the film part (2) is arranged on the first tool half (5; 41; 50) outside the laminating region (10), by means of which a material reservoir (52) for holding in readiness an additional length (53) can be produced on the bend-around region (20).

10. Installation for producing a component laminated with a film part (2), in particular with a decorative layer, in particular a motor vehicle interior trim part comprising the apparatus (1) for laminating the film part (2) on a carrier part (3) according to anyone of the preceding claims and comprising an apparatus for bending round a bend-around region (20) of the film part (2) which projects radially beyond a carrier part edge (14).

11. Method for laminating a film part (2), in particular a decorative layer, on a carrier part (3) by means of a tool (4; 40) comprising a first and second tool half (5, 6; 41, 42; 50) in which the film part (2) in the tool (4; 40) can be provided with a surface design, in which the film part (2) is laminated onto the carrier part (3) in a laminating region (10) and in which a bend-around region (20) of the film part (2) is produced in an edge region (11) arranged adjacent to this laminating region (10), which bend-around region (20) can subsequently be bent around a carrier part edge (14) ***characterized in that*** in the edge region (11) in the first tool half (5; 41; 50) an additional tool part (30) is brought into effective contact with the film part (2), in order to treat the film part (2) in the edge region (11) thermally differently than in the laminating region (10), wherein the film part (2) cools more slowly in the edge region (11) than in the laminating region (10).

12. The method according to claim 11, ***characterized in that*** the film part (2), in particular the bend-around region (20) of the film part (2), undergoes a stretching lengthening in the edge region (11) arranged adjacent to the laminating region (10).

13. The method according to anyone of claims from 11 to 12, ***characterized in that** the* film part (2) is sucked into a material recess (51) arranged next to the laminating region (10) into the first tool half (5, 41, 50), in order to produce a material reservoir (52) on the bend-around region (20) so that the bend-around region (20) can then again be sucked more easily into a material recess (45) of the second tool half (6, 42).

14. The method according to anyone of claims from 11 to 13, ***characterized in that** the* film part (2) is additionally heated in the edge region (11) arranged adjacent to the laminating region (10).

15. The method according to anyone of claims from 11 to 14, ***characterized in that*** the film part (2) is preheated before introduction into the tool (4; 40).

16. The method according to anyone of claims from 11 to 15, ***characterized in that*** said surface design, in particular a surface texture or the like, is imprinted on the film part (2) by sucking the film part (2) by means of vacuum towards the first tool half (5, 41, 50).

17. The method according to claim 16, ***characterized in that*** the first (5, 41, 50) and second tool halves (6, 42) are then closed whereby the film part (2) is thereby laminated on the carrier part (3) held by the second tool half (6, 42), wherein the bend-around region (20) of the film part (2) is produced in the film run-out of the laminating tool (4; 40), wherein the vacuum on the side of the first tool half (5, 41, 50) is deactivated, wherein for laminating the film part (2), on the one hand use is made of the pressure force with which the first (5, 41, 50) and second tool halves (6, 42) are pressed towards one another during laminating and on the other hand, in particular the bend-around region (20) of the film part (2) sucked by means of a vacuum produced on the second tool half (6, 42) in order to be able to better laminate the bend-around region (20) onto the carrier part edge (14).

18. The method according to claim 17, ***characterized in that** the* bend-around region (20) located in the film run-out is further shortened after laminating the film part (2) and the remaining bend-around region which is left over is then subsequently adhesively bonded on a rear side of the carrier part (3).

19. The method according to anyone of claims from 11 to 18, ***characterized in that** the* additional tool part (30) is made of, or is coated by, a thermal material having better thermal insulating properties compared with a first tool half material in the laminating region (10).

## Revendications

1. Dispositif (1) pour le contrecollage d'une partie de feuille (2), en particulier d'une couche décorative, sur une pièce support (3), avec une zone de contrecollage (10), dans laquelle la partie de feuille (2) peut être contrecollée sur la pièce support (3), en particulier sur une pièce de revêtement intérieur d'un véhicule automobile, avec une zone de bord (11) adjacente à cette zone de contrecollage (10), dans laquelle la partie de feuille (2) dépasse de la pièce support (3), pour produire une zone de rembordement (20) au niveau de la partie de feuille (2), qui peut être rembordée ultérieurement autour d'un bord de la pièce support (14), et avec un outil (4; 40), dans lequel l'outil (4; 40) présente un premier demi-outil (5; 41; 50) pour produire un fini de surface au niveau de la partie de feuille (2) et un demi-outil (6; 42) pour recevoir la pièce support (3), **caractérisé par** une partie d'outil supplémentaire (30), qui est agencée au moins partiellement dans le premier demi-outil (5; 41; 50) dans la zone de bord (11) adjacente à la zone de contrecollage (10), dans lequel la partie d'outil supplémentaire (30) consiste en un matériau thermique, ou est revêtue avec, qui présente de meilleures propriétés d'isolation thermique par rapport à un matériau du premier demi-outil dans la zone de contrecollage (10).

2. Dispositif (1) selon la revendication 1, **caractérisé en ce que** la partie d'outil supplémentaire (30) est un composant d'élément intégral (44) de la première demie partie d'outil (5; 41; 50) ou est agencée comme une partie d'outil indépendante (31) à côté du premier demi-outil (5; 41; 50).

3. Dispositif (1) selon la revendication 1 ou 2, **caractérisé en ce que** l'outil (4; 40) est un outil d'In-Mould Graining (IMG), dans lequel le premier demi-outil (5; 41; 50) comprend dans la zone de contrecollage (10) une « coque-IMG » dans un matériau de nickel.

4. Dispositif (1) selon la revendication 1 ou 2 ou 3, **caractérisé en ce que** le deuxième demi-outil (6; 42) comprend un logement de support (9), pour maintenir la pièce support (3) en position, dans lequel le deuxième demi-outil (6; 42) est équipé d'une cavité dans le matériau (45) directement à côté du logement de support (9), dans lequel la zone de rembordement (20) peut être déplacée ou tirée plus profondément dans le deuxième demi-outil (6; 42).

5. Dispositif (1) selon la revendication 4, **caractérisé en ce que** la cavité dans le matériau (45) est formée comme une cannelure ou similaire au niveau du deuxième demi-outil (6; 42).

6. Dispositif (1) selon l'une quelconque des revendications précédentes, **caractérisé en ce que** le matériau thermique est un plastique, une céramique ou un métal non-ferreux moins fortement conducteur de chaleur.

7. Dispositif (1) selon l'une quelconque des revendications précédentes, **caractérisé en ce que** au niveau du deuxième demi-outil (6; 42) une rainure de poinçonnage (15) est prévue, dans lequel la partie d'outil supplémentaire (30) est installée à partir de la rainure de poinçonnage (15) dans la zone de bord, vu dans la direction d'un côté de la rainure de poinçonnage (15) opposé à la zone de contrecollage (10).

8. Dispositif selon l'une des revendications 1 à 7, **caractérisé en ce que** la partie d'outil supplémentaire (30) est aussi conçue ou utilisée comme une zone partielle thermique (26; 43), qui consiste en plus de 30 % ou plus de 50 %, de préférence plus de 90 %, du matériau thermique (27) comme de préférence d'autres parties (28) du premier demi-outil (5; 41; 50).

9. Dispositif (1) selon l'une quelconque des revendications précédentes, **caractérisé en ce que** au niveau du premier demi-outil (5; 41; 50) hors de la zone de contrecollage (10) un évidement de matériau (52) est agencé pour plier la zone de rembordement (20) de la partie de feuille (2), au moyen duquel un réservoir de matériau (52) destiné à tenir à disposition une longueur supplémentaire (53) au niveau de la zone de rembordement (20) peut être produit.

10. Installation pour fabriquer une pièce contrecollée, en particulier une pièce de revêtement intérieur d'un véhicule automobile, avec une partie de feuille (2), en particulier avec une couche décorative, comprenant le dispositif (1) pour le contrecollage de la partie de feuille (2) sur une pièce support (3) selon l'une quelconque des revendications précédentes et comprenant un dispositif pour remborder une zone de rembordement (20) de la partie de feuille (2), dépassant radialement d'un bord de la pièce support (14).

11. Procédé pour le contrecollage d'une partie de feuille (2), en particulier d'une couche décorative, sur une pièce support (3) au moyen d'un outil (4; 40) comprenant un premier et un deuxième demi-outils (5, 6; 41, 42; 50), dans lequel la partie de feuille (2) peut être pourvue dans l'outil (4; 40) d'un fini de surface, dans lequel la partie de feuille (2) dans une zone de contrecollage (10) est contrecollée sur la pièce support (3), et dans lequel dans une zone de bord (11) adjacente à cette zone de contrecollage (10) une zone de rembordement (20) de la partie de feuille (2) est produite, qui peut être rembordée ultérieurement autour d'un bord de la pièce support (14), **caractérisé en ce que** dans la zone de bord (11) dans le premier demi-outil (5; 41; 50) une partie d'outil supplémentaire (30) est mise en contact actif avec la partie de feuille (2), pour traiter thermiquement la partie de feuille (2) dans la zone de bord (11) autrement que dans la zone de contrecollage (10), dans lequel la partie de feuille (2) dans la zone de bord (11) se refroidit plus lentement que dans la zone de contrecollage (10).

12. Procédé selon la revendication 11, **caractérisé en ce que** la partie de feuille (2), en particulier la zone de rembordement (20) de la partie de feuille (2) subit une extension de tracé (53) dans la zone de bord (11) adjacente à la zone de contrecollage (10).

13. Procédé selon l'une des revendications 11 à 12, **caractérisé en ce que** la partie de feuille (2) est aspirée dans un évidement de matériau (51) agencé à côté de la zone de contrecollage (10) dans le premier demi-outil (5; 41; 50), pour produire un réservoir de matériau (52) au niveau de la zone de rembordement (20), de sorte que la zone de rembordement (20) puisse ensuite être aspirée à son tour plus facilement dans une cavité dans le matériau (45) du deuxième demi-outil (6; 42).

14. Procédé selon l'une des revendications 11 à 13, **caractérisé en ce que** la partie de feuille (2) est réchauffée encore davantage dans la zone de bord (11) adjacente à la zone de contrecollage (10).

15. Procédé selon l'une des revendications 11 à 14, **caractérisé en ce que** la partie de feuille (2) est préchauffée avant l'introduction dans l'outil (4; 40).

16. Procédé selon l'une des revendications 11 à 15, **caractérisé en ce que** le fini de surface, en particulier un grainage ou similaire, est imprimé sur la partie de feuille (2), en aspirant la partie de feuille (2) au moyen du vide au contact du premier demi-outil (5, 41, 50).

17. Procédé selon la revendication 16, **caractérisé en ce que** le premier (5, 41, 50) et le deuxième (6; 42) demi-outils sont ensuite fermés, dans lequel la partie de feuille (2) est contrecollée ici sur une pièce support (3) maintenue par le deuxième demi-outil (6; 42), dans lequel la zone de rembordement (20) de la partie de feuille (2) est produite dans une sortie de feuilles de l'outil de contrecollage (4; 40), dans lequel le vide est désactivé du côté du premier demi-outil (5, 41, 50), dans lequel pour le contrecollage de la partie de feuille (2) d'une part la force de pressage est utilisée, avec laquelle le premier (5, 41, 50) et le deuxième (6; 42) demi-outils sont pressés l'un contre l'autre lors du contrecollage et d'autre part en particulier la zone de rembordement (20) de la partie de feuille (2) est aspirée au moyen d'un vide produit au niveau du deuxième demi-outil (6; 42), pour pouvoir mieux contrecoller la zone de rembordement (20) au bord de la pièce support (14).

18. Procédé selon la revendication 17, **caractérisé en ce que** la zone de rembordement (20) se trouvant dans la sortie de feuilles est encore raccourcie après le contrecollage de la partie de feuille (2) et la zone de rembordement en excédent, restante est ensuite ultérieurement collée sur une face arrière de la pièce support (3).

19. Procédé selon l'une des revendications 11 à 18, **caractérisé en ce que** la partie d'outil supplémentaire (30) consiste en un matériau thermique, ou est revêtue avec, qui présente de meilleures propriétés d'isolation thermique par rapport à un matériau du premier demi-outil dans la zone de contrecollage (10).
